# EUROPÄISCHE PATENTSCHRIFT

(11) **EP 2 000 387 B1**
(45) Veröffentlichungstag und Bekanntmachung des Hinweises auf die Patenterteilung: **03.07.2019**
(21) Anmeldenummer: 08008931.1
(22) Anmeldetag: 14.05.2008
(51) Int. Cl.: B61L 15/00, B61L 27/00, H04L 12/66

(54) **Verfahren zur Datenkommunikation zwischen auf einem Gleisnetz befindlichen Schienenfahrzeugen und einer Zielsenke**
Method for data communication between a rail vehicle on a rail network and a target source
Procédé de communication de données entre des véhicules sur rail se trouvant sur un réseau ferré et une cible

(30) Priorität: 25.05.2007 DE 102007024731
(43) Veröffentlichungstag der Anmeldung: 10.12.2008
(73) Patentinhaber: Deutsche Bahn AG, 10785 Berlin (DE)
(72) Erfinder: Baranek, Michael, 64291 Darmstadt (DE); Wilke, Rainer, 59069 Hamm (DE)

(56) Entgegenhaltungen:
- EP-A1- 1 289 197
- EP-A2- 2 071 805
- WO-A1-2005/022839
- WO-A1-2005/105536
- WALTER J FRANZ ET AL: "Internet on the Road via Inter-Vehicle Communications", 20060101 , 1. Januar 2006 (2006-01-01), XP009104885, Gefunden im Internet: URL:http://www7old.informatik.uni-erlangen .de/~dulz/fkom/06/Material/12/Fleetnet/GI_ WShop_FleetNet.pdf

## Beschreibung

Die Erfindung betrifft ein Verfahren zur Datenkommunikation zwischen auf einem Gleisnetz befindlichen Schienenfahrzeugen und einer Zielsenke, wobei jedes Schienenfahrzeug einen mobilen Knoten eines an sich bekannten selbstkonfigurierenden Funknetzes zur Datenkommunikation bildet, dessen Knoten unter Verwendung topologiebasierter Routingverfahren miteinander kommunizieren, und jedes Schienenfahrzeug über ein mobiles, (de-)aktivierbares Gateway zum Netzübergang in ein weiteres Telekommunikationsnetz verfügt.

In der Vergangenheit war die von auf einem Gleisnetz bewegten Schienenfahrzeugen ausgehende Datenkommunikation an übergeordnete (und meist ortsfeste) Instanzen zur Überwachung oder Disposition der Fahrzeuge mangels geeigneter mobiler Telekommunikationsmöglichkeiten von großen Schwierigkeiten geprägt.
Für die Ortung von Schienenfahrzeugen auf Gleisnetzen wurden beispielsweise technische Systeme entwickelt, die eine Belegung von Gleisabschnitten durch Schienenfahrzeuge sicher erkennen und somit Unfälle vermeiden sollen. Die Ortung der Schienenfahrzeuge erfolgte dabei meist nicht durch direkte Meldungsabgabe der Schienenfahrzeuge, sondern durch ein Nachverfolgen der von den Schienenfahrzeugen in anderen technischen Systemen hinterlassenen "Spuren". Dieser Aspekt der Fahrzeug-Ortung war in der Vergangenheit hauptsächlich durch sicherheitstechnische Erwägungen geprägt. Für diese Zwecke der Sicherungstechnik ist eine nähere Identifizierung des jeweiligen Schienenfahrzeuges zunächst ohne Relevanz; ein Erkennen des Vorhandenseins ist ausreichend. Für dispositive Zwecke ist jedoch auch die Identität der Schienenfahrzeuge von großer Bedeutung. In diesem Zusammenhang ist es ebenfalls seit langem bekannt, eine solche "Belegt"-Information in den sicherungstechnischen Einrichtungen mit technischen Mitteln abzugreifen und zusätzlich mit einem das Fahrzeug bzw. den Zugverband kennzeichnenden Identifizierungselement zu verknüpfen. Üblicherweise wird hierzu ein abstrakter Identifier "Zugnummer" genutzt. Diese Art von Leittechnik basiert also darauf, dass einer Zugnummer jeweils mit Mitteln der Sicherungstechnik generierte Ort-Zeit-Wertepaare (= "ein bestimmter Gleisabschnitt ist zu einem bestimmten Zeitpunkt belegt") zugeordnet werden. Mit dem Fortschalten der "Belegt"-Information durch die sicherungstechnischen Einrichtungen geht somit auch in der Leittechnik ein Fortschalten der Orts-Information einer Zugfahrt einher. Schienenstrecken, die einer solchen leittechnischen Überwachung unterworfen werden sollen, müssen deshalb mit einer technischen Zusatzausrüstung ausgestattet werden, die den Signalabgriff sicherungstechnischer Datenelemente für leittechnische Zwecke ermöglicht (z.B. sog. "ZLV-Bus"). Abgesehen von den daraus resultierenden Infrastruktur-Kosten sind derartige Systeme dennoch nicht in der Lage, die aktuellen Erfordernisse der Logistik zu erfüllen, welche ein exaktes Management aller Fahrzeugbewegungen erfordern. Beispielsweise müssen die mittels eines ZLV-Bus gewonnenen Ortsinformationen der Züge in nachgelagerten Arbeitsschritten mit Wagenlisten abgeglichen werden, damit man letztlich eine Information hinsichtlich des aktuellen Auftenthaltsortes eines einzelnen Fahrzeuges ermitteln kann. Derartige Wagenlisten werden im Vorfeld der Zusammenstellung von verschiedenen Einzel-Fahrzeugen zu einem Zugverband, dem dann eine eindeutige Zugnummer zugewiesen wird, erstellt. Eine solche Wagenliste umfasst dann - neben der Zugnummer - sowohl die Identifikationsnummer des führenden Triebfahrzeuges als auch sämtliche Identifikationsnummern der angehängten Wagen. Somit stellt die Wagenliste eine Tabelle zur Referenzierung zwischen den physikalischen Identifiern zur Bezeichnung der Einzel-Fahrzeuge und dem abstrakten Identifier "Zugnummer" zur Bezeichnung eines Zugverbandes dar. Ein aus logistischer Sicht weiterer Nachteil eines solchen Systemkonzepts ist darin zu sehen, dass keine aktuellen Zustandsdaten hinsichtlich des aktuellen Fahrzeug- oder Ladungs-Zustandes (die mit Sensoren am Fahrzeug erfasst werden können) übertragbar sind.

Die hohen Kosten zur flächendeckenden Austattung der Gleisanlagen mit solchen leittechnischen Infrastrukturen waren in der Vergangenheit oftmals nicht wirtschaftlich darstellbar. Aus dem Stand der Technik sind deshalb zahlreiche Vorschläge bekannt, die auf eine Verlagerung der Intelligenz von den eher unflexiblen und mit hohen Sprungkosten behafteten streckenseitigen Infrastruktur-Einrichtungen hin zu flexibler handhabbaren fahrzeug-gebundenen Geräten abzielen. Fahrzeugbasierte Systeme weisen den grundsätzlichen Vorteil auf, stets am aktuell benötigten Einsatzort verfügbar zu sein. Die Nutzungsintensität fahrzeugbasierter Systeme ist im Vergleich zur Nutzungsintensität ortsfester, streckenbegleitender Systeme stets höher. Deshalb verspricht man sich mit einem solchen Ansatz eine signifikant verbesserte Wirtschaftlichkeit.

So wird beispielsweise in der DE 10 2005 034 488 A1 vorgeschlagen, dass sämtliche Einzelfahrzeuge über ein Ortungsgerät, z. B. in Form eines GPS-Empfängers, verfügen und diese Ortsinformation mittels einer Datenfunkverbindung (z. B. auf der Basis eines terrestrischen Mobilfunknetzes nach dem GSM-Standard) jeweils an eine zentrale Auswertungsinstanz übersenden. Eine solche Auswertungsinstanz kann dann aus den Orts-Meldungen aller Einzelfahrzeuge die Eingangsdaten für weitere Anwendungen generieren, z.B. zur Erstellung der Wagenlisten von Zugverbänden, für die Sendungsverfolgung etc. Allerdings verursachen derartige Systeme angesichts der Vielzahl von gleichzeitig im Betrieb stehenden Fahrzeugen beträchtliche Investitionskosten (Anschaffung und Installation der Telekommunikations-Endgeräte) sowie hohe Kosten bei der Betriebsführung (zusätzliche Investitionskosten für ein ausreichend dimensioniertes Telekommunikationsnetz, Verbindungsentgelte etc...).

Ein anderer aktueller technischer Lösungsansatz zur Echtzeitüberwachung von Gütern bzw. Fahrzeugen sieht vor, dass die zu überwachenden Objekte mit Transpondern (z.B. nach der RFID-Technologie) versehen sind. Diese Transponder können sowohl Fahrzeug- wie auch Sendungsdaten enthalten und werden an Kontrollpunkten ausgelesen. Es liegt auf der Hand, dass derartige Ansätze entweder bei geringer Kontrollpunkt-Dichte nicht den Anforderungen an eine unter logistischen Gesichtspunkten befriedigende Echtzeit-Überwachung genügen oder aber bei einer hierfür hinreichend hohen Kontrollpunkt-Dichte große Investitionen in die Infrastruktur der Kontrollstationen bzw. Auslesegeräte erfordern.

Selbstkonfigurierende Funknetze zur Datenkommunikation sind in Form mobiler ad-hoc-Netze ("MANet") oder "vehicular ad-hoc-networks" ("VANet") aus dem Stand der Technik bekannt. Die ebenfalls für sich genommen aus dem Stand der Technik bekannten topologiebasierten Routingverfahren kommen ohne genaue Informationen über die Positionen der Knoten des mobilen ad-hoc-Netzwerkes aus. Stattdessen sind Informationen über die Nachbarschaftsbeziehungen - d.h. welche Knoten eine direkte Verbindung miteinander haben und somit ohne Zwischenschaltung anderer Knoten miteinander kommunizieren können - ausreichend. Die einzelnen Knoten senden hierbei in zyklischer Abfolge Datensätze mit Angaben zur Identität des Knotens sowie zur Identität der benachbarten Knoten aus. Ein solches mobiles ad-hoc-Netz lehrt beispielsweise die EP 1 289 197 A1. Gemäß der dort offenbarten Lehre bilden die Reisenden, die sich an Bord eines Busses oder Zuges befinden, ein solches mobiles ad-hoc-Netzwerk, das sich über einen mobilen Router an Bord des Zuges mit externen Netzwerken, z.B. mobilen Telekommunikationssystemen, verbinden kann. Aus der WO 2005/1055536 A1 ist ein System zur Kontrolle der Vollständigkeit eines aus mehreren Waggons bestehenden Zugverbandes bekannt, bei dem sich eine Mehrzahl von Prüf- und Überwachungsrechnern, die jeweils einem spezifischen Drehgestell des Zugverbandes zugeordnet sind, zu einem funkbasierten Netzwerk vermaschen, so dass deren Betriebs- und / oder Überwachungsdaten auf einen der Lokomotive des Zugverbandes angeordneter Master-Rechner zum Zwecke der Überwachung verfügbar gemacht werden können. Zugleich können die Daten von diesem Master-Rechner aus an ortsfest entlang der Eisenbahnstrecken installierte Gateways übertragen werden, von wo aus eine Weiterleitung über ein Internet-basiertes Netzwerk an ortsfeste Büros möglich ist.
Des Weiteren sind Forschungsvorhaben bekannt, deren Zielstellung in der Schaffung eines selbstkonfigurierenden vermaschten Netzes mobiler Endgeräte besteht (sog. "mobiles ad-hoc-Netz" bzw. "MANet"). Bei diesen mobilen Endgeräten handelt es sich üblicherweise um Mobiltelefone, Kleincomputer oder Laptops. Die Grundidee eines solchen selbstkonfigurierenden Netzes besteht darin, dass die mobilen Endgeräte ohne Existenz einer übergeordneten Infrastruktur Kommunikationsverbindungen zueinander aufbauen können. Jedes Gerät (im MANet werden diese als "Knoten" bezeichnet) dient dabei nicht nur als Sende- und Empfangsstation, sondern zugleich auch als Router für die Datenübertragung zwischen anderen Teilnehmern. Die Aufwendungen für die Infrastruktur eines solchen selbstkonfigurierenden Netzes sind deutlich niedriger als für die Infrastruktur eines vergleichsweise starr und hierarchisch aufgebauten herkömmlichen Telekommunikationsnetzes, z.B. eines Mobilfunk-Netzes nach dem GSM-Standard.
Da sämtliche Knoten eines selbstkonfigurierenden Netzes unablässig in Bewegung sind und sich die relativen Positionen der einzelnen Knoten zueinander und damit die Topologie des Netzwerkes ständig ändern, sind allerdings aufwändige Routingverfahren nötig. Hierbei werden für jeden Knoten immerfort aktualisierte Routingtabellen erzeugt, welche als Grundlage für die Weiterleitung von Datenpaketen erforderlich sind. Auf diese Weise kann ein nahezu beliebig großes Netz geschaffen werden, welches auch die Kommunikation zwischen zueinander weit entfernten Knoten ermöglicht. Bei hinreichend eng vermaschten Netzen ist der Ausfall eines einzelnen Knotens für die Kommunikationsbeziehungen der übrigen Knoten zueinander im Wesentlichen unkritisch. Zudem weisen derartige Netze eine gute und gleichmäßigere Lastverteilung auf, was sich letztlich auch in niedrigeren Netzwerkkosten niederschlägt.
Im Forschungsprojekt "FleetNet" des deutschen Bundesministeriums für Bildung und Forschung (BMBF) wurden Lösungsansätze erarbeitet, derartige mobile ad-hoc-Netze auf den Straßenverkehr zu übertragen. Derartige ad-hoc-Netze, bei denen Fahrzeuge als Knoten fungieren, sind in der Fachwelt als VANet bzw. "Vehicular Ad Hoc Network" bekannt. Im Forschungsprojekt "FleetNet" sollen zwischen einzelnen, als Knoten in einem MANet fungierenden Fahrzeugen Daten über Multihop-Routen ausgetauscht werden (siehe Franz / Hartenstein / Bochow: "Internet on the Road via Inter-Vehicle Communications"; Workshop der Informatik 2001: Mobile Communications over Wireless LAN: Research and Applications, Gemeinsame Jahrestagung der GI und OCG, Wien, Austria, September 2001). Es werden hierbei zum einen Anwendungen zur Kommunikation zwischen Fahrzeugen vorgeschlagen, wie beispielsweise das Aussenden einer Warnmeldung von einem (z.B. unfall- oder pannen-bedingt) liegengebliebenen Fahrzeug an die nachfolgenden Fahrzeuge. Ebenso wurden andere Funktionen mit zwischen den Fahrzeugen auszutauschenden Warnmeldungen offenbart, z.B. zum Einhalten eines sicheren Mindestabstandes zwischen einzelnen Fahrzeugen (Überholen, Auffahren, Einfädeln). Im Rahmen dieses Forschungs-Konzeptes werden also Kommunikationsbeziehungen offenbart, deren Ziel jeweils alle Knoten in einem bestimmten geografischen Bereich sind.
Zum anderen bietet dieses Forschungsvorhaben Vorschläge zum Datenaustausch zwischen Internetanwendungen und über die Ortskoordinate selektierbaren Fahrzeugen, wie z.B. das Übersenden von aktuellen Informationen an Fahrzeuge, die in eine definierte räumliche Zone einfahren (z.B. Werbeangebote an Fahrzeuge, die auf den Parkplatz eines Baumarktes einfahren; Informationen zur innerstädtischen Verkehrslage an Fahrzeuge, die sich in Zufahrt auf ein Stadtgebiet befinden etc.). Hierzu wird auch eine Kommunikationsbeziehung zwischen einem Fahrzeug und einer ortsfesten Kommunikationsstation am Straßenrand in Betracht gezogen. Diese ortsfesten Kommunikationsstationen können auch als Gateway - beispielsweise zur Anbindung in das Internet oder zur Kopplung mit anderen Netzwerken etc... - eingesetzt werden. Hierzu alternativ können auch mobile Knoten (d.h. Fahrzeuge, die jeweils Bestandteil eines mobilen ad-hoc-Netzwerkes sind) als Gateway fungieren.
Schließlich schlägt das Forschungsvorhaben noch Anwendungen vor, bei denen durch "Service Center" Daten von den einzelnen Fahrzeugen eingesammelt und weiterverarbeitet werden. Die aus diesen verarbeiteten Daten gezogenen Schlussfolgerungen werden sodann wieder an die Fahrzeuge zurück übermittelt. Auf diese Weise sollen zum Beispiel aus von den Fahrzeugen übermittelten Stillstandsmeldungen Schlüsse über das Vorhandensein von Verkehrsstaus auf bestimmten Straßenabschnitten gezogen werden. Diese Informationen sollen aber lediglich zwischen räumlich eng benachbarten Fahrzeugen (nachfolgende Fahrzeuge, Fahrzeuge in der Gegenrichtung etc...) ausgetauscht werden. Einem übergeordneten System (z.B. zur Verkehrssteuerung) können diese Daten jedoch nur dann zugänglich gemacht werden, wenn entlang aller Strassen die o.g. Gateways installiert würden, was jedoch erhebliche Investitionen erfordert.

Der Erfindung liegt die Aufgabe zugrunde, ein Verfahren zur Datenkommunikation zwischen auf einem Gleisnetz befindlichen Schienenfahrzeugen und einer Zielsenke bereitzustellen, wobei jedes Schienenfahrzeug einen mobilen Knoten eines an sich bekannten selbstkonfigurierenden Funknetzes zur Datenkommunikation bildet, dessen Knoten unter Verwendung topologiebasierter Routingverfahren miteinander kommunizieren, und jedes Schienenfahrzeug über ein mobiles, (de-)aktivierbares Gateway zum Netzübergang in ein weiteres Telekommunikationsnetz verfügt, welches eine gegenüber dem bekannten Stand der Technik deutlich kostengünstigere Erhebung der Identitäts-, Positions- und Zustandsdaten der Schienenfahrzeuge sowie deren Verfügbarmachung in logistischen Produktionssystemen ermöglicht, wobei.
- die Datenkommunikation von mobilen Knoten eines selbstkonfigurierenden Funknetzes, das mindestens einen als örtlich installiertes Gateway zum Netzübergang in ein weiteres Telekommunikationsnetz ausgebildeten Knoten umfasst, über dieses mindestens eine örtlich installierte Gateway an die Zielsenke erfolgt,
- sowie die Datenkommunikation von mobilen Knoten eines selbstkonfigurierenden Funknetzes, das keinen als örtlich installiertes Gateway zum Netzübergang in ein weiteres Telekommunikationsnetz ausgebildeten Knoten umfasst, über ein mobiles Gateway an die Zielsenke erfolgt,
   wobei im Zuge einer Initialisierung ein mobiler Knoten dieses selbstkonfigurierenden Funknetzes ermittelt wird, dessen mobiles Gateway für die Datenkommunikation aktiviert wird.

Der Grundgedanke der Erfindung basiert also darauf, dass alle auf einem Gleisnetz befindlichen Schienenfahrzeuge, die zur Teilnahme als Knoten eines mobilen ad-hoc-Netzes ausgerüstet und im Rahmen der technologisch bedingten Reichweiten des für das ad-hoc-Netz verwendeten Funk-Trägermediums maximal zueinander beabstandet sind, sich zunächst zu einem mobilen ad-hoc-Netz vermaschen (dies könnte z.B. der Fall sein, wenn mehrere zuvor isoliert und über die Fläche verstreut stehende Einzelwagen zu einem Zugverband zusammengestellt werden) und über ein Gateway den Netzübergang zu einem weiteren Telekommunikationsnetz erlangen. In Abhängigkeit davon, ob sich mindestens ein an diesem mobilen ad-hoc-Netzwerk teilnehmendes Schienenfahrzeug im räumlichen Einflussbereich eines ortsfesten bzw. örtlich installierten Gateways befindet, wird das örtlich installierte Gateway ein Bestandteil der Routing-tabelle dieses Schienenfahrzeuges und damit für alle anderen am ad-hoc-Netz teilnehmenden Knoten als Ausgangspunkt für eine Datenkommunikation in Richtung zu einer außerhalb dieses ad-hoc-Netzes angesiedelten Datensenke bzw. Zielsenke nutzbar. Diese spezielle Konstellation für sich genommen entspricht dem bereits bekannten Stand der Technik und ist nicht Gegenstand der vorliegenden Erfindung. Die Aufgabe der Erfindung besteht darin, dass auch in allen anderen Fällen, in denen kein Kontakt zu einem örtlich installierten Gateway gegeben ist, eine Datenkommunikation zwischen dem mobilen ad-hoc-Netz und einem weiteren Telekommunikationsnetz möglich ist. Hierzu soll aus der Gesamtmenge aller mobilen Knoten eines gemeinsamen mobilen ad-hoc-Netzes ein Knoten ermittelt werden, dessen diesem zugeordnetes mobiles Gateway zum Zwecke eines Netzübergangs in ein weiteres Telekommunikationsnetz aktiviert wird.
Diese Aufgabe wird in Verbindung mit dem Oberbegriff des Patentanspruches 1 erfindungsgemäß dadurch gelöst, dass von jedem Knoten eines selbstkonfigurierenden Funknetzes Zustandsinformationen zum eigenen Betriebsstatus ermittelt und jeweils in einen von diesem Knoten zyklisch ausgesendeten Datensatz integriert werden. Auf diese Weise werden die Statusinformationen aller am ad-hoc-Funknetz teilnehmenden mobilen Knoten im Funknetz bekannt und einer Auswertungsoperation zugänglich gemacht.
Die Erfindung ermöglicht somit eine deutliche Reduzierung der Investitionskosten für den Aufbau ortsfester Infrastruktur-Anlagen, da örtlich installierte Gateways nur in solchen abgeschlossenen räumlichen Bereichen vorgesehen sind, in denen eine hohe Dichte von Einzelfahrzeugen (also: viele Fahrzeuge auf begrenztem Raum) anzutreffen und somit eine gute zeitliche Auslastung des bzw. der örtlich installierten Gateways zu erwarten ist. Üblicherweise handelt es sich bei derartigen Bereichen um Zugbildungsanlagen und -bahnhöfe, in denen neu beginnende Züge zusammengestellt bzw. ankommende Züge aufgelöst werden. In der betrieblichen Praxis der deutschen Eisenbahnen kann es jedoch aus Gründen der Einheitlichkeit sinnvoll sein, für jeden Bahnhof mindestens einen solchen Bereich vorzusehen. Im Kontext dieser vorliegenden Erfindung werden diese abgeschlossenen räumlichen Bereiche vereinfachend als "Stationsbereiche" bezeichnet. In diesen Stationsbereichen kommuniziert jedes Fahrzeug mit mindestens einem örtlich installierten Gateway. Für jedes dieser Gateways ist eine exakte räumliche Positionsangabe bekannt und hinterlegt. Somit können die vom Gateway empfangenen Daten dann zusammen mit dieser Positionsangabe z.B. an ein übergeordnetes Datenverarbeitungssystem weitergeleitet werden, wo diese Daten dann zum Zwecke der Sendungs- bzw. Laufwegsverfolgung einzelner Fahrzeuge aufbereitet und weiterverarbeitet werden können.
Spätestens wenn sich ein solcher Zugverband aus dem durch mindestens ein örtlich installiertes Gateway versorgten Stationsbereich auf die freie Strecke bewegt, verlässt er den räumlichen Einflussbereich des bzw. der örtlich installierten Gateways. Dabei sendet jeder einzelne Knoten - d.h. jedes einzelne Schienenfahrzeug - dieses Zuges weiterhin und unverändert in zyklischer Weise Datenkommunikationspakete aus. Mit Verlassen des Stationsbereiches verliert sukzessiv jeder Knoten des Zugverbandes und damit schließlich auch ein gesamtes aus mehreren Knoten bzw. Schienenfahrzeugen gebildetes ad-hoc-Netz den Kommunikationskontakt zu einem örtlich installierten Gateway. Dieser fehlende Kontakt zu einem örtlich installierten Gateway kann dadurch erkannt werden, wenn in keiner der Routingtabellen des mobilen ad-hoc-Netzes die Bedingung "Erreichbarkeit eines örtlich installierten Netzausgangspunktes (= Gateway)" mehr erfüllt ist. Mittels unterschiedlicher Kennungen können mobile und ortsfeste Gateways unterscheidbar gekennzeichnet werden.
Sobald dies der Fall ist, wird die Datenkommunikation auf mindestens ein zwischenzeitlich aktiviertes mobiles Gateway eines der Schienenfahrzeuge umgelegt. Aus dem Einflussbereich des örtlich installierten Gateways löst sich also - bildlich gesprochen - mit der Ausfahrt eines Zuges mindestens ein neues, kleineres mobiles ad-hoc-Netzwerk ab, das nach Abschluss dieses Ablösungsprozesses den gesamten aus dem Stationsbereich ausgefahrenen Zugverband bzw. dessen Zugteile umfasst. Im Idealfall eines technologisch homogenen Zugverbandes, d.h. wenn alle Einzelwagen des Zugverbandes identisch zur Teilnahme am mobilen ad-hoc-Netz ausgerüstet sind, kann ein einziges mobiles Gateway für den Netzübergang ausreichend sein. Bei Vorhandensein hinreichend großer technologischer Lücken (d.h. also technologisch ausgerüstete Fahrzeugs sind durch die Zwischenreihung nicht-ausgerüsteter Einzelwagen soweit voneinander getrennt, dass keine Verbindung mittels eines ad-hoc-Netzes möglich ist) bilden sich bezogen auf den Zugverband mehrere einzelne ad-hoc-Netze aus, die jeweils einen Teil des Zugverbandes abdecken.
Auf diese Weise ist es möglich, dass die mobile Gateway-Funktion eines Zugverbandes erst bei dessen Ausfahrt von einem Bahnhof auf die freie Strecke aktiviert wird. Die Betriebsführung des erfinderischen Systems ist einfacher und kostengünstiger, wenn die den Schienenfahrzeugen zugeordneten Gateways in den Abdeckungsbereichen der ortsfesten Gateways deaktiviert sind.

Ebenso ermöglicht es die Erfindung, dass bei einer lückenhaften Abdeckung eines Stationsbereiches durch ortsfeste Gateways solche Schienenfahrzeuge, die in einer solchen Abdeckungslücke positioniert sind, die Funktion eines Hilfs-Gateways übernehmen. Es ist also nach dem erfinderischen Konzept nicht zwingend erforderlich, dass jeder Stationsbereich zu 100% flächendeckend mittels örtlich installierter Gateways ausgeleuchtet wird. Derartige Abdeckungs-Lücken können also beispielsweise durch temporäres Aufstellen entsprechend ausgestatteter Schienenfahrzeuge als Hilfs-Gateways überbrückt werden.

Es ist für den Fachmann ersichtlich, dass die Erfindung auf vielerlei Arten anwendbar ist. Als Zielsenke kommen beispielsweise Systeme zur Positionsbestimmung von Schienenfahrzeugen in Betracht, aber auch logistische Systeme zur Sendungsverfolgung oder Ladungsüberwachung. Die Erfindung ermöglicht für solche Zielsenken ein kostengünstiges Einsammeln der Daten (Zustandsinformationen etc...) von dezentral in der Fläche verstreuten Datenquellen. In diesem Zusammenhang wäre z.B. das Abfragen von sensorisch erfassbaren Ladungs- oder Fahrzeugzuständen (Temperatur im Transportbehälter, Temperaturen in den Achslagern, Transportbehälter ordnungsgemäß geschlossen etc...) denkbar. Alle hierfür erforderlichen Sensoren eines einzelnen Schienenfahrzeuges oder Ladungsbehälters können sternförmig an einen diesem Schienenfahrzeug bzw. Ladungsbehälter zugeordneten Konzentrator angeschlossen werden. Dieser Konzentrator bildet dann das Gateway des Sensornetzwerkes des Einzel-Fahrzeuges, welches die Sensordaten in die Datenkommunikation des mobilen ad-hoc-Netzes einkoppelt. Das Gateway des Sensornetzwerkes bildet dabei gleichzeitig einen Knoten des aus mehreren Fahrzeugen bzw. Ladungsbehältern aufgebauten ad-hoc-Netzes.

Gemäß einer besonderen Ausgestaltung wird bei der Ermittlung des zu aktivierenden mobilen Gateways von jedem Knoten eines selbstkonfigurierenden Funknetzes das Leistungsvermögen der Stromversorgung des ihm zugeordneten mobilen Gateways ermittelt, mit den von anderen Knoten desselben Funknetzes empfangenen Zustandsinformationen zum Leistungsvermögen der Stromversorgung weiterer mobiler Gateways verglichen und die Zustandsinformation der besten erkannten Stromversorgung jeweils in einen von diesem Knoten zyklisch ausgesendeten Datensatz integriert. Auf diese Weise erhält beispielsweise ein erster mobiler Knoten den Status eines zweiten mobilen Knotens mitgeteilt. Der erste Knoten erkennt durch Auswerten dieser Mitteilung, dass sein eigener spezifischer Status beispielsweise schlechter als derjenige des zweiten Knotens ist und meldet deshalb das zweite Fahrzeug als potentielles mobiles Gateway in das Netz. Auf der Basis eines solchen rekursiven Verfahrens wird das gesamte selbstkonfigurierende Netz mit der Statusinformation des bestmöglichen Knotens durchdrungen. Dieses rekursive Verfahren zur Ermittlung des zu aktivierenden mobilen Gateways bricht ab, sobald nur noch ein einzige Fahrzeug-Identität im Netz kommuniziert wird.

In konkreter Anwendung kann dies beispielsweise dadurch geschehen, dass der Ladungszustand batteriegespeister Stromversorgungen erfasst und ausgewertet wird. Ebenso kann in einer weiteren konkreten Ausgestaltung vorgesehen sein, dass mobile Knoten mit bordeigener Stromerzeugung (also z.B. Triebfahrzeuge) bevorzugt als Träger-Fahrzeug für das zu aktivierende mobile Gateway eines ad-hoc-Netzes dienen. Auf diese Weise wird die Auswahl des mobilen Gateways mit der geringsten energetisch bedingten Ausfallwahrscheinlichkeit erreicht. Es ist für den Fachmann jedoch auch denkbar, andere Auswahlkriterien für die Bestimmung des zu aktivierenden mobilen Gateways zugrundezulegen. Es könnte sich hierbei beispielsweise um die maximal mögliche Datenübertragungsrate eines jeden Gateways oder um Gateways mit besondern Tarifierungsmerkmalen (Flatrate etc.) handeln.

Eine vorteilhafte Ausprägung der Erfindung sieht vor, dass das mobile Gateway eines jeden mobilen Knotens eines selbstkonfigurierenden Funknetzes bei fehlender Kommunikationsverbindung zwischen diesem mobilen Knoten und einem örtlich installierten Gateway aktiviert wird. Auf diese Weise wird eine zeitliche Entkopplung beim Übergang von der Kommunikation über das örtlich installierte Gateway auf die Kommunikation über ein aktiviertes mobiles Gateway ermöglicht, so dass die Aktivierung des mobilen Gateways nicht unbedingt nahtlos an die Kommunikation über das örtlich installierte Gateway anschließen muss. In einem solchen Fall würde zunächst jeder aus der geographischen Reichweite des örtlich installierten Gateways austretende mobile Knoten das ihm zugeordnete mobile Gateway aktivieren. Dies erfolgt solange, bis in diesem selbstkonfigurierenden Funknetz z.B. durch Ablauf einer vorgebbaren Zeitkonstante ΔT die Ermittlung eines als gemeinsames Gateway für das gesamte selbstkonfigurierende Funknetz dienenden mobilen Knotens initiiert wird.

Da nicht jeder Zugverband notwendigerweise aus technisch homogen ausgestatteten Einzelfahrzeugen bestehen muss (z.B. bedingt durch das Mitführen von nicht-ausgerüsteten Fahrzeugen fremder Einsteller), können sich innerhalb eines Zugverbandes also auch Lücken bilden. In Abhängigkeit von der im konkreten Einzelfall gewählten Parametrisierung des für die mobilen ad-hoc-Netze einzusetzenden Funk-Trägermediums und der räumlichen Erstreckung einer solchen technologischen "Lücke", können die Lücken innerhalb eines einzigen ad-hoc-Netzes überbrückt werden. Die Reichweite des Trägerfunks kann aber auch so kurz ausgebildet sein, dass bereits einzelne Schienenfahrzeuge eine nicht-überbrückbare Lücke darstellen. In solchen Fällen sieht die Erfindung die Herausbildung mehrerer einzelner Teil-ad-hoc-Netze vor, die jeweils für sich über ein örtlich installiertes Gateway kommunizieren oder über ein eigenes mobiles Gateway verfügen. Die Erfindung sieht deshalb ferner vor, dass die über jedes Gateway laufende Datenkommunikation um eine Kennungsdate zur eindeutigen Identifizierung des zum Gateway gehörigen selbstkonfigurierenden Funknetzes ergänzt wird. Auf diese Weise können die einzelnen Datenströme der Teil-ad-hoc-Netze voneinander unterscheidbar gemacht werden. Dies bildet die technische Grundlage sowohl für eine strikte Trennung der Datenströme (z.B. wenn die von Schienenfahrzeugen unterschiedlicher Transporteure innerhalb eines einzigen Zugverbandes stammenden Daten unterschiedlichen Datensenken zugeordnet werden sollen) als auch für eine Aggregation bzw. Zusammenfassung zusammengehöriger Datenströme (z.B. wenn innerhalb eines Zugverbandes eines ersten Transporteurs einzelne Fahrzeuge eines zweiten "fremden" Transporteurs eingereiht sind und somit für den ersten und / oder zweiten Transporteur jeweils mehrere Teil-Datenströme aggregiert werden müssen).

Gemäß einer Weiterentwicklung des erfinderischen Konzepts können von jedem mobilen Knoten des selbstkonfigurierenden Funknetzes Ausgangsdaten von Sensoren eines fahrzeugeigenen Sensor-Netzwerkes empfangen, ausgewertet und die Auswertungsergebnisse jeweils in einen von diesem Knoten zyklisch ausgesendeten Datensatz integriert werden. Jeder mobile Knoten dient als Konzentrator eines fahrzeugbezogenen Sensor-Netzwerkes.
Bei solchen Sensoren könnte es sich beispielsweise um Erschütterungssensoren handeln, die für jeden mobilen Knoten erkennen können, ob sich das jeweils zugehörige Träger-Schienenfahrzeug in Bewegung (= "Fahrzustand") befindet. Eine mögliche Auswertung könnte darin bestehen, dass gemäß einer oben genannten Ausgestaltung der Erfindung die Ermittlung eines gemeinsamen mobilen Gateways initiiert wird, sobald die Beschleunigungssensoren aller mobilen Knoten über ein Zeitraum ΔT hinweg einen Fahrzustand registriert haben.
Eine andere Anwendung könnte RFID-Transponder (die im Kontext dieser Erfindung auch als "Sensor" betrachtet werden sollen) an den jeweiligen Stirnseiten der Träger-Fahrzeuge aller mobilen Knoten vorsehen (z.B. im Bereich der jeweiligen Puffer-Bohlen montiert). Auf diese Weise kann in jedem Knoten die richtungsgenaue Identität jedes Nachbar-Fahrzeuges verfügbar gemacht werden.

Gemäß einer sinnvollen Ausgestaltung werden von jedem mobilen Knoten des selbstkonfigurierenden Funknetzes in zyklischer Weise Angaben zur Feldstärke jeder von benachbarten Knoten empfangenen Nachricht und / oder Angaben zur aktuellen eigenen geographischen Position des Knotens ermittelt sowie jeweils in einen von diesem Knoten zyklisch ausgesendeten Datensatz integriert. Auf diese Weise werden in jedem ad-hoc-Netz die Feldstärken aller Kommunikationsbeziehungen zwischen jedem einzelnen der mobilen Knoten und / oder deren aktuelle geographischen Positionen erfasst und einer Auswertung zugänglich gemacht. Hierzu sind insbesondere satellitengestützte Ortungstechnologien, wie z.B. GPS, GLONAS oder GALILEO, geeignet.

Die Erfindung sieht dann vor, dass in einem Knoten eines jeden selbstkonfigurierenden Funknetzes aus den von den übrigen mobilen Knoten desselben Funknetzes empfangenen Datensätzen unter Auswertung jedes Datenelementes zur Feldstärke oder unter Auswertung von Ausgangsdaten der Sensoren der jeweiligen fahrzeugeigenen Sensor-Netzwerke die Reihungs-Folge der mit diesem Knoten in Form eines Zugverbandes verbundenen weiteren mobilen Knoten bzw. Schienenfahrzeuge ermittelt wird. Wenn wie im obigen Beispiel ("RFID-Transponder") in jedem Knoten die richtungsgenaue Identität jedes Nachbar-Fahrzeuges verfügbar ist, so kann hieraus für den gesamten Zugverband problemlos die Reihungs-Folge aller Einzel-Fahrzeuge bzw. mobiler Knoten ermittelt werden.
Auf diese Weise kann nicht nur die Reihung der Fahrzeuge innerhalb des Zuges erkannt werden sondern auch die Zugschlussüberwachung erfolgen. Bei der Zugschlussüberwachung prüft das erfindungsgemäße Verfahren, ob die Identität des im Zugverband letzten Fahrzeuges während der Zugfahrt unverändert bleibt. Ergibt sich diesbezüglich eine Änderung, die nicht unter Anwendung der weiter oben beschriebenen Regeln im Umgang mit temporären Störeinflüssen (z.B. bei Parallelfahrten oder Zugbegegnungen auf freier Strecke) korrigiert werden kann, so ist auf eine Veränderung des Zugschluss - beispielsweise durch eine Zugtrennung infolge eines Kupplungsbruches - zu erkennen.

Des Weiteren ist es gemäß der Erfindung möglich, dass in einem Knoten eines jeden selbstkonfigurierenden Funknetzes aus den von den übrigen mobilen Knoten desselben Funknetzes empfangenen Datensätzen unter Auswertung jedes Datenelementes zur Feldstärke und / oder der aktuellen geographischen Position jedes Knotens die Belegung des Gleisnetzes mit Schienenfahrzeugen ermittelt wird. Die in dem von den Schienenfahrzeugen gebildeten mobilen ad-hoc-Netzwerk ermittelten Nachbarschaftsbeziehungen können somit noch effektiver in Bezug zueinander gesetzt und auf einen im System hinterlegten Gleisplan abgebildet werden. Wenn die einzelnen Schienenfahrzeuge gemäß einer Ausführungsvariante der vorliegenden Erfindung noch zusätzlich mit jeweils einer eigenen Vorrichtung zur Ermittlung der eigenen Position (z.B. mittels GPS) ausgestattet sind, kann dies noch effektiver geschehen.

Im Kontext der Erfindung ist es sinnvoll, wenn die Ermittlung der Reihungs-Folge und / oder der Belegung des Gleisnetzes in dem dem jeweils aktivierten Gateway des selbstkonfigurierenden Netzes zugeordneten Knoten erfolgt. Auf diese Weise wird ein Knoten des selbstkonfigurierenden Funknetzes zum Master, der für alle anderen Knoten desselben Netzes die Berechnung / Ermittlungs-Aktivitäten ausführt und zur weiteren Verwendung in nachgelagerten Zielsenken zur Verfügung stellt.
Alternativ wäre natürlich die Auswertung in einem nachgelagerten zentralen System möglich, das die Daten über das jeweils aktivierte Gateway erhält, verarbeitet und wieder an die mobilen Knoten zurückgibt. Allerdings wäre diese Variante mit einem höheren Kommunikationsaufwand für die Datenübertragung, z.B. über ein kostenpflichtiges Mobilfunknetz, verbunden.

Alternativ hierzu sieht die Erfindung ferner vor, dass die Ermittlung der Reihungs-Folge und / oder der Belegung des Gleisnetzes in einem ausschließlich für Auswertungszwecke vorgehaltenen Knoten des selbstkonfigurierenden Netzes erfolgt. Beispielsweise könnte ein Mitarbeiter mit einem Handheld-Gerät ausgestattet sein, dass sich als Knoten in das selbstkonfigurierende Funknetz einbucht und die o.g. Auswertungen durchführt. Auf diese Weise kann ein Wagenmeister die Zusammenstellung und Reihung der in Zugbildungsanlagen zu Zugverbänden zusammengestellten Schienenfahrzeuge erfassen und an nachgelagerte Datenverarbeitungssysteme übergeben.

Der Erfindungsgedanke wird anhand eines Ausführungsbeispiels in nachfolgenden Figuren visualisiert. Es zeigen:
- **Figur 1**: Ausgangssituation mit drei in einem Stationsbereich abgestellten Fahrzeugen
- **Figur 2**: Darstellung der Situation nach Zusammenstellung der Fahrzeuge zu einem Zugverband
- **Figur 3**: Darstellung der Situation nach Ankopplung eines zusätzlichen Fahrzeuges F ("Triebfahrzeug")
- **Figur 4**: Darstellung der Situation nach Ausfahren des Zuges aus dem Stationsbereich auf die freie Strecke vor Bildung des mobilen ad-hoc-Netzes
- **Figur 5**: Darstellung der Situation nach Ausfahren des Zuges aus dem Stationsbereich auf die freie Strecke nach Bildung des mobilen ad-hoc-Netzes
- **Figur 6**: Darstellung der Situation auf der freien Strecke nach Bildung des mobilen ad-hoc-Netzes bzw. mehrerer mobiler Teil-ad-hoc-Netze
- **Figur 7**: Darstellung der Situation bei Begegnung des von Triebfahrzeug F geführten Zuges mit einem weiteren Zug auf der freien Strecke

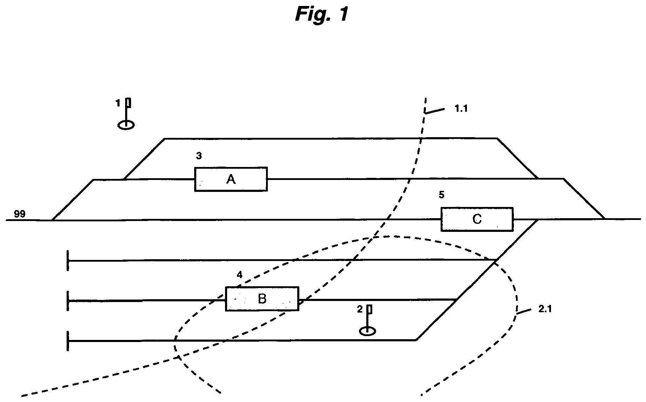

In Figur 1 ist eine fiktive Ausgangssituation mit drei im Gleisfeld eines definierten geographischen Bereiches (99) (im Folgenden als "Stationsbereich" bezeichnet) abgestellten (nicht-angetriebenen) Fahrzeugen (A, B, C) dargestellt. Bei diesen Fahrzeugen handelt es sich um nicht-angetriebene Güterwagen, die - wie in den nachfolgenden Verfahrensschritten dargestellt - zu einem Zugverbund zusammengestellt und auf die Fahrt zu einem anderen Zielbahnhof geschickt werden sollen. Die Fahrzeuge sind mit Funkmodulen kurzer Reichweite ausgestattet, die zum Aufbau eines selbstkonfigurierenden Funknetzes bzw. mobilen ad-hoc-Netzes (MANet) bzw. vehicular-ad-hocnetwork (VANet) geeignet sind. Weiterhin ist auf jedem Fahrzeug ein mobiles Gateway installiert, welches separat aktiviert bzw. deaktiviert werden kann sowie durch Verwendung unterschiedlicher Kennungen von einem örtlich installierten Gateway sowie von den mobilen Gateways der einzelnen Fahrzeuge unterscheidbar ist.

Der mehrere Gleise und Weichen umfassende Stationsbereich (99) wird von zwei örtlich installierten Gateways (1, 2) ausgeleuchtet, die ebenfalls als Knoten in einem von den Fahrzeugen aufgebauten MANet fungieren sollen. Allerdings ist diese Ausleuchtung - z.B. durch topographische Gegebenheiten - unvollständig. Das Fahrzeug C steht in einer solchen Abdeckungslücke und hat somit keine Möglichkeit, in einem MANet direkt mit einem der beiden örtlich installierten Gateways in Kontakt zu treten.

Das Fahrzeug A befindet sich in einem Stationsbereich und innerhalb der geographischen Reichweite (1.1) des Gateways 1. Da das Fahrzeug A somit direkten Kontakt mit einem örtlich installierten Gateway hat, bleibt das auf dem Fahrzeug A installierte mobile Gateway (3) deaktiviert. Auf diese Weise werden unnötige Kommunikationsverbindungen eingespart, was zur Senkung der Kommunikationskosten beiträgt.

Das Fahrzeug B befindet sich in einem Stationsbereich und innerhalb der geographischen Reichweite (2.1) des Gateways 2. Da das Fahrzeug B Kontakt mit einem örtlich installierten Gateway hat, bleibt das auf dem Fahrzeug B installierte mobile Gateway (4) deaktiviert. Auf diese Weise werden unnötige Kommunikationsverbindungen eingespart, was zur Senkung der Kommunikationskosten beiträgt.

Das Fahrzeug C befindet sich in einem Stationsbereich aber weder innerhalb der geographischen Reichweite (1.1) des Gateways 1 noch in der geographischen Reichweite (2.1) des Gateways 2. Da das Fahrzeug C keinen Kontakt zu einem örtlich installierten Gateway hat ist über einen Algorithmus zu prüfen, ob das Fahrzeug C über die Vermittlungsaktivität des MANet (sogenannte "multi-hop-Vermittlung") Kontakt zu einem örtlich installierten Gateway erhält oder das auf dem Fahrzeug C installierte mobile Gateway (5) aktiviert wird.

Im Zuge des Aufbaus eines MANet gewinnen alle Knoten - z.B. durch Aussenden von HELLO-Paketen - Informationen über die Nachbarschaftsbeziehungen der jeweiligen Knoten.

Die Routing-Tabelle des Fahrzeugs A umfasst also folgende Nachbarn (zu denen eine direkte Verbindung möglich ist):
▪ Örtliches Gateway 1
▪ Fahrzeug B
▪ Fahrzeug C

Die Routing-Tabelle des Fahrzeugs B umfasst folgende Nachbarn:
▪ Örtliches Gateway 1
▪ Örtliches Gateway 2
▪ Fahrzeug A
▪ Fahrzeug C

Die Routing-Tabelle des Fahrzeugs C umfasst folgende Nachbarn:
▪ Fahrzeug A
▪ Fahrzeug B

Beim Aufbau der Routing-Tabelle werden die den örtlich installierten Gateways zugeordneten Knoten mittels einer speziellen Kennzeichnung als "Gateways", also als Netzausgangspunkte für eine Datenübertragung an externe Netze bzw. Datenverarbeitungssysteme, erkannt. Das Fahrzeug A kann nur mit dem örtlichen Gateway 1 kommunizieren. Bei Fahrzeug B entscheidet die bessere Feldstärke darüber, ob eine Datenkommunikation mit Gateway 1 oder mit Gateway 2 erfolgt. Von Fahrzeug C aus kann eine Datenkommunikation mit einem Gateway über die Vermittlungsaktivität des MANet erfolgen (sogenannte "multi-hop-Vermittlung"). Hierbei wird ein vom Fahrzeug C an das übergeordnete Datenverarbeitungssystem zu versendendes Datenpaket zunächst an das Fahrzeug A oder Fahrzeug B, und von dort aus an eines der beiden örtlichen Gateways 1 bzw. 2 übertragen. Der exakte Übertragungsweg ist hierbei nicht vordefiniert und insbesondere von der jeweiligen Signalstärke abhängig. Die Fahrzeuge (A, B, C) senden Datenpakete mit Angaben zu ihrer Identität aus, die ggf. unter Anwendung einer mulit-hop-Vermittlung an eines der örtlichen Gateways (1, 2) gelangen, und von dort - ergänzt um die Ortskoordinaten des jeweils transferierenden Gateways - an ein übergeordnetes Datenverarbeitungssystem zur Laufweg- bzw. Sendungsverfolgung weitergegeben werden. Die Genauigkeit der auf diese Weise ermittelten Positionsbestimmung hängt damit also im Wesentlichen von der Dichte an Standorten örtlicher Gateways und der Größe von deren geographischen Abdeckungsbereichen ab. Wenn die Fahrzeuge gemäß einer besonderen Ausführungsform der Erfindung über eigene Vorrichtungen zur Positionsbestimmung verfügen, so ist diese Ortsinformation inhaltlicher Bestandteil des von den Fahrzeugen versendeten Datenpaketes. Die Ortskoordinate des jeweiligen örtlich installierten Gateways ist in diesem Fall dann für die Datenübertragung an das übergeordnete Laufweg- bzw. Sendungsverfolgungssystem nicht mehr relevant.

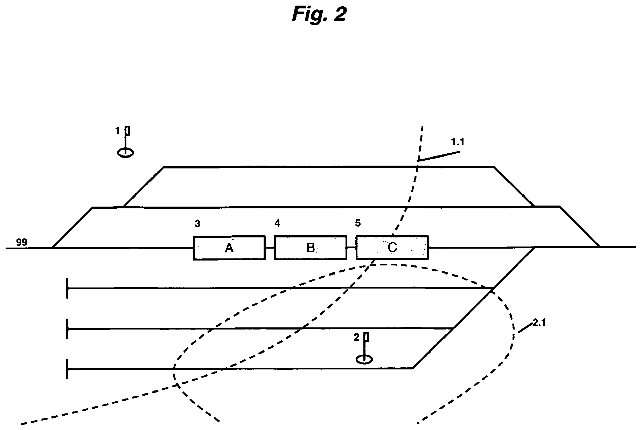

Die Figur 2 zeigt eine Darstellung der Situation nach Zusammenstellung der Fahrzeuge zu einem Zugverband, wobei sich die Fahrzeuge nach wie vor auf einem Gleis innerhalb des Stationsbereiches befinden. Alle drei Fahrzeuge (A, B, C) befinden sich nunmehr innerhalb der geographischen Reichweite (1.1) des Gateways 1.

Die Routing-Tabelle des Fahrzeugs A umfasst nunmehr folgende Nachbarn:
▪ Örtliches Gateway 1
▪ Fahrzeug B
▪ Fahrzeug C

Die Routing-Tabelle des Fahrzeugs B umfasst nunmehr folgende Nachbarn:
▪ Örtliches Gateway 1
▪ Fahrzeug A
▪ Fahrzeug C

Die Routing-Tabelle des Fahrzeugs C umfasst nunmehr folgende Nachbarn:
▪ Örtliches Gateway 1
▪ Fahrzeug A
▪ Fahrzeug B

Eine von den Fahrzeugen ausgehende Datenkommunikation würde nunmehr über das örtliche Gateway 1 laufen.

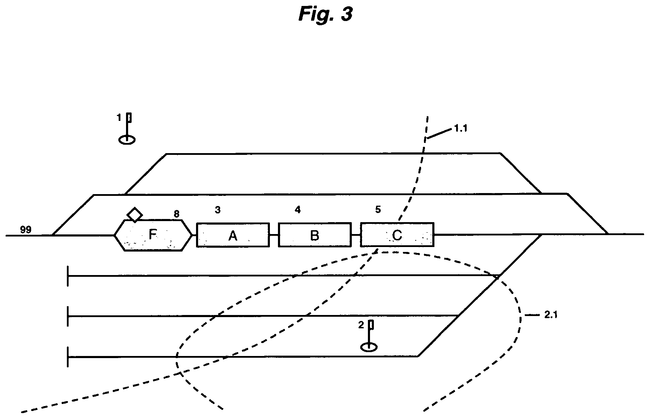

Wie in Figur 3 dargestellt, koppelt nun ein zusätzliches (angetriebenes) Fahrzeug F (im Folgenden als "Triebfahrzeug" bezeichnet) an diesen bislang aus den Fahrzeugen A, B und C bestehenden Zugverband an. Dieses Triebfahrzeug F befindet sich ebenfalls innerhalb der geographischen Reichweite (1.1) des Gateways 1. Auf dem Triebfahrzeug F ist ein mobiles Gateway (8) installiert, welches durch Verwendung unterschiedlicher Kennungen von einem örtlich installierten Gateway unterscheidbar ist.

Die Routing-Tabelle des Fahrzeugs F umfasst folgende Nachbarn:
▪ Örtliches Gateway 1
▪ Fahrzeug A
▪ Fahrzeug B
▪ Fahrzeug C

Da das Triebfahrzeug F Kontakt mit einem örtlich installierten Gateway hat, bleibt das auf Triebfahrzeug F installierte mobile Gateway (8) deaktiviert. Auf diese Weise werden unnötige Kommunikationsverbindungen eingespart, was zur Senkung der Kommunikationskosten beiträgt.

Im Folgenden geht das Ausführungsbeispiel jedoch von einem Triebfahrzeug ohne mobilem Gateway aus, da eine solche Ausrüstung des Triebfahrzeuges für die Erfindung nicht von besonderer Relevanz ist.

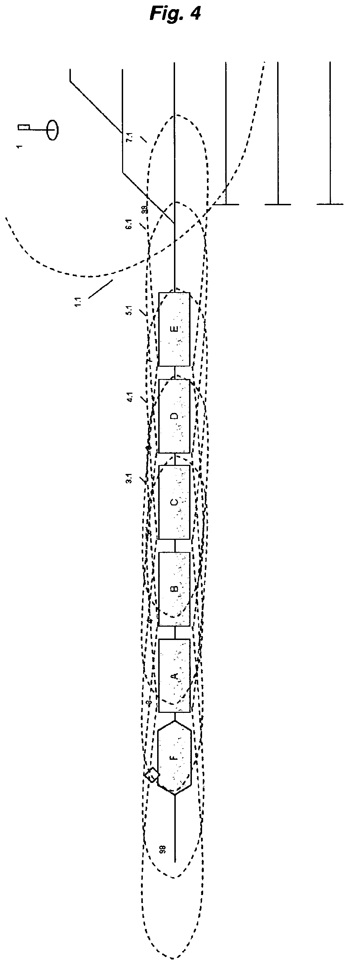

Figur 4 zeigt das Ausfahren des aus dem Triebfahrzeug F sowie den nicht-angetriebenen Fahrzeugen A, B, C, D und E aus dem Stationsbereich (99) auf die freie Strecke (98). Es handelt es sich hierbei um einen Zugverband mit technisch homogen ausgerüsteten Einzelfahrzeugen (also z.B. Fahrzeuge eines einzigen Einstellers). Alle Fahrzeuge (A, B, C, D, E, F) haben bereits die geographische Reichweite (1.1) des örtlichen Gateways 1 verlassen.

Das auf dem Fahrzeug A installierte mobile Gateway (3) wird aktiviert, sobald das Fahrzeug A aus der geographischen Reichweite (1.1) des örtlichen Gateways 1 ausfährt und das Gateway 1 somit aus der Routing-Tabelle des Fahrzeugs A entfernt wird. Die geographische Reichweite (3.1) des mobilen Gateways 3 erstreckt sich auf die Fahrzeuge F, B und C.

Das auf dem Fahrzeug B installierte mobile Gateway (4) wird aktiviert, sobald das Fahrzeug B aus der geographischen Reichweite (1.1) des örtlichen Gateways 1 ausfährt und das Gateway 1 somit aus der Routing-Tabelle des Fahrzeugs B entfernt wird. Die geographische Reichweite (4.1) des mobilen Gateways 4 erstreckt sich auf die Fahrzeuge F, A, C und D.

Das auf dem Fahrzeug C installierte mobile Gateway (5) wird aktiviert, sobald das Fahrzeug C aus der geographischen Reichweite (1.1) des örtlichen Gateways 1 ausfährt und das Gateway 1 somit aus der Routing-Tabelle des Fahrzeugs C entfernt wird. Die geographische Reichweite (5.1) des mobilen Gateways 5 erstreckt sich auf die Fahrzeuge F, A, B, D und E.

Das auf dem Fahrzeug D installierte mobile Gateway (6) wird aktiviert, sobald das Fahrzeug D aus der geographischen Reichweite (1.1) des örtlichen Gateways 1 ausfährt und das Gateway 1 somit aus der Routing-Tabelle des Fahrzeugs D entfernt wird. Die geographische Reichweite (6.1) des mobilen Gateways 6 erstreckt sich auf die Fahrzeuge A, B, C und E.

Das auf dem Fahrzeug E installierte mobile Gateway (7) wird aktiviert, sobald das Fahrzeug E aus der geographischen Reichweite (1.1) des örtlichen Gateways 1 ausfährt und das Gateway 1 somit aus der Routing-Tabelle des Fahrzeugs E entfernt wird. Die geographische Reichweite (7.1) des mobilen Gateways 7 erstreckt sich auf die Fahrzeuge B, C und D.

Im Zuge des Aufbaus eines MANet gewinnen alle Knoten - z.B. durch Aussenden von HELLO-Paketen - Informationen über die Nachbarschaftsbeziehungen der jeweiligen Knoten.

Die Routing-Tabelle des Fahrzeugs A umfasst nun folgende Nachbarn:
▪ Fahrzeug B mit mobilem Gateway (4)
▪ Fahrzeug C mit mobilem Gateway (5)

Die Routing-Tabelle des Fahrzeugs B umfasst nun folgende Nachbarn:
▪ Fahrzeug A mit mobilem Gateway (3)
▪ Fahrzeug C mit mobilem Gateway (5)
▪ Fahrzeug D mit mobilem Gateway (6)

Die Routing-Tabelle des Fahrzeugs C umfasst nun folgende Nachbarn:
▪ Fahrzeug A mit mobilem Gateway (3)
▪ Fahrzeug B mit mobilem Gateway (4)
▪ Fahrzeug D mit mobilem Gateway (6)
▪ Fahrzeug E mit mobilem Gateway (7)

Die Routing-Tabelle des Fahrzeugs D umfasst nun folgende Nachbarn:
▪ Fahrzeug B mit mobilem Gateway (4)
▪ Fahrzeug C mit mobilem Gateway (5)
▪ Fahrzeug E mit mobilem Gateway (7)

Die Routing-Tabelle des Fahrzeugs E umfasst nun folgende Nachbarn:
▪ Fahrzeug C mit mobilem Gateway (5)
▪ Fahrzeug D mit mobilem Gateway (6)

Prinzipiell hat jedes Fahrzeug durch das installierte und aktivierte mobile Gateway die Möglichkeit der übergeordneten Kommunikation.

Im Zuge des Aufbaus eines MANet gewinnen alle Knoten - z.B. durch Aussenden von HELLO-Paketen - die bereits oben angesprochenen Informationen über die Nachbarschaftsbeziehungen der jeweiligen Knoten. Je nachdem welches Fahrzeug die Funktion des Gateways im MANet (verteilten Zug-Bus-System) übernimmt, ergeben sich geänderte Routing-Tabellen für die einzelnen Fahrzeuge.

Die Erfindung sieht vor, dass nach Ablauf einer frei wählbaren Zeitspanne ΔT die Ermittlung eines für alle mobile Knoten des MANet gemeinsamen mobilen Gateways initiiert wird. Für diese Ermittlung wird z.B. Batterie-Restkapazität aller mobilen Gateways ermittelt und das Gateway mit der höchsten Restkapazität zum einzigen aktiven mobilen Gateway bestimmt. Während alle anderen mobilen Gateways deaktiviert werden, wird dieses ausgewählte mobile Gateway aktiviert bzw. es bleibt aktiviert. In einem Sonderfall könnte auch ein mobiler Knoten, der über eine permanente Stromversorgung zu Traktionszwecken verfügt (z.B. ein als mobiler Knoten im Netzwerk eingebundenes Triebfahrzeug), die Funktion des Gateways des sich bildenden MANet übernehmen.

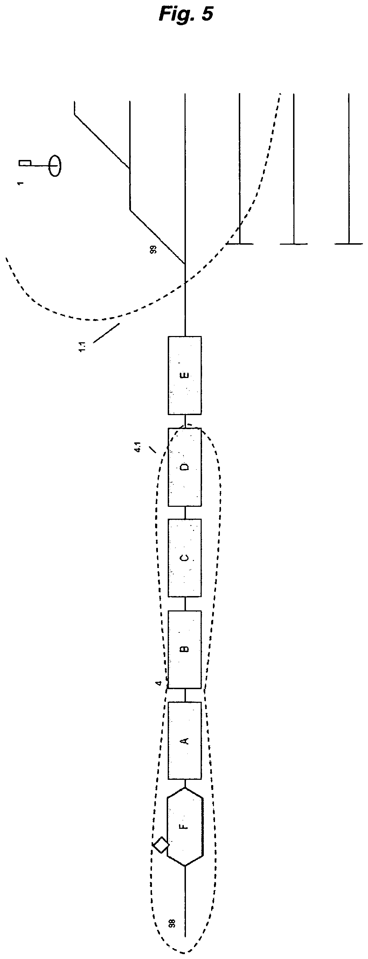

In Figur 5 wird das gebildete MANet (verteiltes Zug-Bus-System) dargestellt, in dem das Fahrzeug B die Funktion des Gateways im MANet übernimmt und das auf dem Fahrzeug B installierte mobile Gateway (4) aktiviert bleibt. Die geographische Reichweite (4.1) des mobilen Gateways 4 erstreckt sich auf die Fahrzeuge F, A, C und D.

Das auf dem Fahrzeug A installierte mobile Gateway (3), das auf dem Fahrzeug C installierte mobile Gateway (5), das auf dem Fahrzeug D installierte mobile Gateway (6) und das auf dem Fahrzeug E installierte mobile Gateway (7) sind deaktiviert.

Die aktualisierte Routing-Tabelle des Fahrzeugs A umfasst nun folgende Nachbarn:
▪ Fahrzeug B mit mobilem Gateway (4)
▪ Fahrzeug C

Die aktualisierte Routing-Tabelle des Fahrzeugs B umfasst nun folgende Nachbarn:
▪ Fahrzeug A
▪ Fahrzeug C
▪ Fahrzeug D

Die aktualisierte Routing-Tabelle des Fahrzeugs C umfasst nun folgende Nachbarn:
▪ Fahrzeug A
▪ Fahrzeug B mit mobilem Gateway (4)
▪ Fahrzeug D
▪ Fahrzeug E

Die aktualisierte Routing-Tabelle des Fahrzeugs D umfasst nun folgende Nachbarn:
▪ Fahrzeug B mit mobilem Gateway (4)
▪ Fahrzeug C
▪ Fahrzeug E

Die aktualisierte Routing-Tabelle des Fahrzeugs E umfasst nun folgende Nachbarn:
▪ Fahrzeug C
▪ Fahrzeug D

Eine Datenkommunikation vom Fahrzeug E an das Gateway des MANets auf Fahrzeug B kann nur mittels multi-hop-Vermittlung im MANet erfolgen. Das Fahrzeug E sendet also beispielsweise Datenpakete mit Angaben zu seiner Identität aus, die unter Anwendung einer mulit-hop-Vermittlung über die Knoten C oder D (hierüber entscheidet im konkreten Einzelfall die jeweils aktuelle Feldstärke) an das auf dem Fahrzeug B installierte mobile Gateway (4) gelangen, und von dort an ein übergeordnetes Datenverarbeitungssystem zur Laufweg- bzw. Sendungsverfolgung weitergegeben werden.

Wenn die Fahrzeuge gemäß einer besonderen Ausführungsform der Erfindung über eigene Vorrichtungen zur Positionsbestimmung verfügen, so ist diese Ortsinformation inhaltlicher Bestandteil des von den Fahrzeugen versendeten Datenpaketes, wodurch die Genauigkeit einer mit dem erfindungsgemäßen Verfahren zur Datenkommunikation durchgeführten Positionsermittlung der Knoten innerhalb eines Gleisnetzes erhöht wird. Eine besondere Ausführungsform der Erfindung sieht aber auch alternativ oder ergänzend hierzu vor, dass jeder Knoten (d.h. jedes Fahrzeug) die Feldstärke jeder von benachbarten Knoten empfangenen Nachricht erfassen kann und diese Information ein inhaltlicher Bestandteil des vom Fahrzeug versendeten Datenpaketes wird. Auf diese Weise kann unter Verwendung des erfindungsgemäßen Verfahrens zur Datenkommunikation aus der Feldstärke-Informationen die Reihenfolge der von im Zugverband mitgeführten Schienenfahrzeuge ermittelt werden. Auf diese Weise können auch ohne autarke Positionsbestimmung eines jeden mitgeführten Fahrzeuges (A, B, C, D, E) die Ungenauigkeiten bei der Positionsermittlung reduziert werden. Es wird z.B. erkannt, dass sich das Fahrzeug D innerhalb eines Zugverbandes zwei Wagenlängen hinter dem Fahrzeug B befindet. Die einzelnen Wagenlängen sind entweder über die Identität der einzelnen Knoten bekannt (z.B. in Form einer Tabelle hinterlegt oder mittels eines Algorithmus aus den Identitäten ableitbar) oder es wird - vereinfachend - eine durchschnittliche Wagenlänge zugrunde gelegt. Bei dieser Form der Positionsbestimmung ist es erforderlich, dass ein Algorithmus die Nachbarschaftsbeziehungen der einzelnen Knoten zueinander in Abhängigkeit zur Feldstärke setzt und vor dem Hintergrund des spurgeführten Verkehrs berücksichtigt.

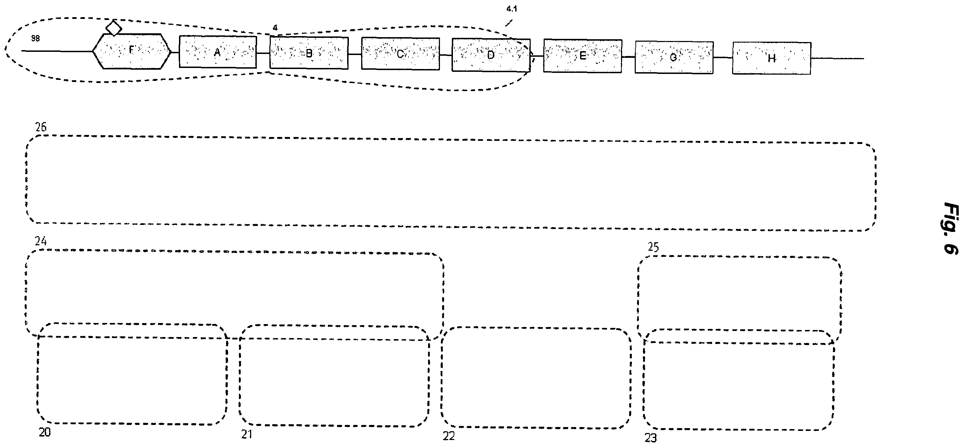

Figur 6 zeigt ein Ausführungsbeispiel mit einem Triebfahrzeug (F), das kein mobiles Gateway besitzt, sowie einem heterogenen Zugverband (also z.B. technisch unterschiedlich ausgerüstete Fahrzeuge unterschiedlicher Eigentümer). Es ist eine Fahrt eines aus dem Triebfahrzeug F sowie den nicht-angetriebenen Fahrzeugen A, B, C und D gebildeten Zuges auf freier Strecke (98) dargestellt. Die Fahrzeuge A, B und D eines ersten Eigentümers "A" verfügen über jeweils ein fahrzeugeigenes ad-hoc-Netz (20, 21, 23), das unterschiedliche Einzelsensoren jedes Fahrzeuges (z.B. Erschütterungssensor, Achslager-Temperaturfühler, Laderaum-Temperaturfühler etc...) miteinander verknüpft. Ebenso verfügt das Fahrzeug C eines zweiten Eigentümers "B" über ein ähnliches fahrzeugeigenes ad-hoc-Netz (22). Jedes fahrzeugeigene ad-hoc-Netz (20, 21, 22, 23) verfügt über jeweils einen Konzentrator.

In einem solchen heterogenen Zugverband bilden sich unter Anwendung des erfindungsgemäßen Verfahrens zur Datenkommunikation mindestens drei MANets (verteilte Zug-Bus-Systeme):
Es bilden sich zum einen separate Teil-ad-hoc-Netze auf Zugebene, welche ausschließlich Fahrzeuge eines einzelnen Eigentümers umfassen (24, 25). Die Zuordnung kann dabei eindeutig über die unterschiedlicher Kennungen der mobilen Gateways erfolgen, indem diese Kennung um eine Date zur Identifizierung des Fahrzeug-Eigentümers erweitert wird. Aufgrund der physikalisch bedingten kurzen Reichweite der eingesetzten Funkmodule ist es möglich, dass sich unter gewissen Voraussetzungen auch mehrere separate Teil-ad-hoc-Netze für die Fahrzeuge eines Eingentümer ergeben können (diese Fahrzeuge sind dann im Zugverband durch Lücken mit technisch nicht-ausgerüsteten Fahrzeugen oder Fahrzeugen anderer Eigentümer voneinander getrennt) und / oder ein separates Teil-ad-hoc-Netz beispielsweise nur ein einziges Fahrzeug umfasst. Es ist erforderlich, dass jedes sich bildende separate Teil-ad-hoc-Netz über ein eigenes Gateway verfügt. Die oben genannten Konzentratoren der fahrzeugeigenen ad-hoc-Netze verhalten sich innerhalb der separaten Teil-ad-hoc-Netze als Knoten. Die Ermittlung des für jedes separate Teil-ad-hoc-Netz jeweils zu aktivierenden Gateways erfolgt gemäß dem in Figur 4 und 5 beschriebenen Ausführungsbeispiel.

Zum anderen bildet sich das übergreifende verteilte Zug-Bus-System (26), welches alle mit einer entsprechenden Systemtechnik ausgerüsteten Fahrzeuge umfasst und gemäß dem in Figur 4 und 5 beschriebenen Ausführungsbeispiel arbeitet. Durch Zusammenfassung mehrerer separater Teil-ad-hoc-Netze werden unnötige Kommunikationsverbindungen eingespart, was zur Senkung der Kommunikationskosten beiträgt. Gemäß des Ausführungsbeispiels in Figur 6 übernimmt das Fahrzeug B sowohl die Funktion des Gateways im übergreifenden ad-hoc-Netz (26) im Sinne des verteilten Zug-Bus-Systems als auch die Funktion des Gateways im Teil-ad-hoc-Netz (24).

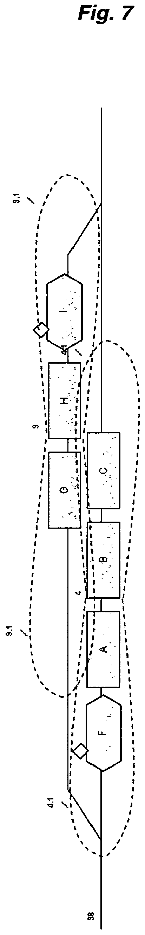

In Figur 7 ist die Begegnung des von Triebfahrzeug F geführten Zuges mit einem weiteren Zug - bestehend aus Triebfahrzeug I sowie den Wagen G und H - dargestellt. Das Fahrzeug B verfügt über ein mobiles Gateway (4) mit der geographischen Reichweite (4.1). Das Fahrzeug H verfügt über ein mobiles Gateway (9) mit der geographischen Reichweite (9.1). Bedingt durch den geringen Abstand der Gleise zueinander kommt es bei der Begegnung beider Züge zu Überlappungen der Reichweiten (4.1) und (9.1). In der dargestellten Situation ist beispielsweise das mobile Gateway (9) auch in der Routing-Tabelle der entgegenkommenden Fahrzeuge A, B und C aufgeführt. Somit würden die Fahrzeuge A, B und C kurzzeitig auch als Teilnehmer des zum Fahrzeug H gehörigen ad-hoc-Netzes betrachtet werden. Umgekehrt würden auch die Fahrzeuge G und H als Bestandteile des zum Fahrzeug B gehörigen ad-hoc-Netzes betrachtet werden. Unter Anwendung von Plausibilitätsbetrachtungen werden derartige Fehlschlüsse jedoch eliminiert. Beispielsweise müsste jedes der Fahrzeuge B und C länger als eine definierter Zeitspanne DELTA T im Einflussbereich des mobilen Gateways (9) von Fahrzeug H verbleiben, damit es tatsächlich als zu dessen ad-hoc-Netz und somit auch zu dessen Zugverband gehörig gewertet wird. Die konkreten Zeitwerte, Variablen etc. für derartige Plausibilitätschecks sind empirisch ermitteltbar und sehr stark von den jeweiligen Rahmenbedingungen des konkreten Anwendungsfalles abhängig.

### Bezugszeichenliste:

- A, B, C, D, E: nicht-angetriebene Fahrzeuge eines ersten Zugverbandes
- F: Triebfahrzeug eines ersten Zugverbandes
- G, H: nicht-angetriebenes Fahrzeug eines zweiten Zugverbandes
- I: Triebfahrzeug eines zweiten Zugverbandes
- 1: erstes örtlich installiertes Gateway im Stationsbereich (99)
- 1.1: geographische Reichweite des Gateways 1
- 2: zweites örtlich installiertes Gateway im Stationsbereich (99)
- 2.1: geographische Reichweite des Gateways 2
- 3: auf dem nicht-angetriebene Fahrzeug A installiertes mobiles Gateway
- 3.1: geographische Reichweite des Gateways 3
- 4: auf dem nicht-angetriebene Fahrzeug B installiertes mobiles Gateway
- 4.1: geographische Reichweite des Gateways 4
- 5: auf dem nicht-angetriebene Fahrzeug C installiertes mobiles Gateway
- 5.1: geographische Reichweite des Gateways 5
- 6: auf dem nicht-angetriebene Fahrzeug D installiertes mobiles Gateway
- 6.1: geographische Reichweite des Gateways 6
- 7: auf dem nicht-angetriebene Fahrzeug E installiertes mobiles Gateway
- 7.1: geographische Reichweite des Gateways 7
- 8: auf dem Triebfahrzeug F installiertes mobiles Gateway
- 8.1: geographische Reichweite des Gateways 8
- 9: auf dem nicht-angetriebene Fahrzeug H installiertes mobiles Gateway
- 9.1: geographische Reichweite des Gateways 9
- 20: ad-hoc-Netz am Fahrzeug A (Sensornetzwerk des Güterwagens A)
- 21: ad-hoc-Netz am Fahrzeug B (Sensornetzwerk des Güterwagens B)
- 22: ad-hoc-Netz am Fahrzeug C (Sensornetzwerk des Güterwagens C)
- 23: ad-hoc-Netz am Fahrzeug D (Sensornetzwerk des Güterwagens D)
- 24: erstes Teil-ad-hoc-Netz (Sub-MANet) (Fahrzeuge eines Eigentümers umfassend)
- 25: zweites Teil-ad-hoc- Netz (Sub-MANet) (Fahrzeuge eines Eigentümers umfassend)
- 26: ad-hoc-Netz (MANet) als verteiltes Zug-Bus-System (alle Wagen des Zuges betreffend)
- 98: Gleisanlagen der freien Strecke
- 99: Gleisanlagen des Stationsbereiches

## Patentansprüche

1. Verfahren zur Datenkommunikation zwischen auf einem Gleisnetz befindlichen Schienenfahrzeugen und einer Zielsenke, wobei jedes Schienenfahrzeug einen mobilen Knoten eines an sich bekannten selbstkonfigurierenden Funknetzes zur Datenkommunikation bildet, dessen Knoten unter Verwendung topologiebasierter Routingverfahren miteinander kommunizieren, und jedes Schienenfahrzeug über ein mobiles, (de-)aktivierbares Gateway zum Netzübergang in ein weiteres Telekommunikationsnetz verfügt, wobei
• die Datenkommunikation von mobilen Knoten (A, B, C in Fig.1) eines selbstkonfigurierenden Funknetzes, das mindestens einen als örtlich installiertes Gateway (1) zum Netzübergang in ein weiteres Telekommunikationsnetz ausgebildeten Knoten umfasst, über dieses mindestens eine örtlich installierte Gateway an die Zielsenke erfolgt,
• sowie die Datenkommunikation von mobilen Knoten eines selbstkonfigurierenden Funknetzes, das keinen als örtlich installiertes Gateway zum Netzübergang in ein weiteres Telekommunikationsnetz ausgebildeten Knoten umfasst, über ein mobiles Gateway an die Zielsenke erfolgt,
wobei im Zuge einer Initialisierung ein mobiler Knoten (B in Fig. 2) dieses selbstkonfigurierenden Funknetzes ermittelt wird, dessen mobiles Gateway (4) für die Datenkommunikation aktiviert wird,.
**dadurch gekennzeichnet, dass**
von jedem Knoten eines selbstkonfigurierenden Funknetzes Zustandsinformationen zum eigenen Betriebsstatus ermittelt und zur Ermittlung des zu aktivierenden mobilen Gateways jeweils in einen von diesem Knoten zyklisch ausgesendeten Datensatz integriert werden.

2. Verfahren zur Datenkommunikation zwischen auf einem Gleisnetz befindlichen Schienenfahrzeugen und einer Zielsenke nach Anspruch 1, **dadurch gekennzeichnet, dass** zur Ermittlung des zu aktivierenden mobilen Gateways von jedem Knoten eines selbstkonfigurierenden Funknetzes das Leistungsvermögen der Stromversorgung des ihm zugeordneten mobilen Gateways ermittelt, mit den von anderen Knoten desselben Funknetzes empfangenen Zustandsinformationen zum Leistungsvermögen der Stromversorgung weiterer mobiler Gateways verglichen und die Zustandsinformation der besten erkannten Stromversorgung jeweils in einen von diesem Knoten zyklisch ausgesendeten Datensatz integriert wird.

3. Verfahren zur Datenkommunikation zwischen auf einem Gleisnetz befindlichen Schienenfahrzeugen und einer Zielsenke nach einem der Ansprüche 1 oder 2, **dadurch gekennzeichnet, dass** das mobile Gateway eines jeden mobilen Knotens eines selbstkonfigurierenden Funknetzes bei fehlender Kommunikationsverbindung zwischen diesem mobilen Knoten und einem örtlich installierten Gateway aktiviert wird.

4. Verfahren zur Datenkommunikation zwischen auf einem Gleisnetz befindlichen Schienenfahrzeugen und einer Zielsenke nach einem der Ansprüche 1 bis 3, **dadurch gekennzeichnet, dass** die über jedes Gateway laufende Datenkommunikation um eine Kennungsdate zur eindeutigen Identifizierung des zum Gateway gehörigen selbstkonfigurierenden Funknetzes ergänzt wird.

5. Verfahren zur Datenkommunikation zwischen auf einem Gleisnetz befindlichen Schienenfahrzeugen und einer Zielsenke nach einem der Ansprüche 1 bis 4, **dadurch gekennzeichnet, dass** von jedem mobilen Knoten des selbstkonfigurierenden Funknetzes Ausgangsdaten von Sensoren eines fahrzeugeigenen Sensor-Netzwerkes empfangen, ausgewertet und die Auswertungsergebnisse jeweils in einen von diesem Knoten zyklisch ausgesendeten Datensatz integriert werden.

6. Verfahren zur Datenkommunikation zwischen auf einem Gleisnetz befindlichen Schienenfahrzeugen und einer Zielsenke nach einem der Ansprüche 1 bis 5, **dadurch gekennzeichnet, dass** von jedem mobilen Knoten des selbstkonfigurierenden Funknetzes in zyklischer Weise Angaben zur Feldstärke jeder von benachbarten Knoten empfangenen Nachricht und / oder Angaben zur aktuellen eigenen geographischen Position des Knotens ermittelt sowie jeweils in einen von diesem Knoten zyklisch ausgesendeten Datensatz integriert werden.

7. Verfahren zur Datenkommunikation zwischen auf einem Gleisnetz befindlichen Schienenfahrzeugen und einer Zielsenke nach Anspruch 5 oder 6, **dadurch gekennzeichnet, dass** in einem Knoten eines jeden selbstkonfigurierenden Funknetzes aus den von den übrigen mobilen Knoten desselben Funknetzes empfangenen Datensätzen unter Auswertung jedes Datenelementes zur Feldstärke oder unter Auswertung von Ausgangsdaten der Sensoren der jeweiligen fahrzeugeigenen Sensor-Netzwerke die Reihungs-Folge der mit diesem Knoten in Form eines Zugverbandes verbundenen weiteren mobilen Knoten bzw. Schienenfahrzeuge ermittelt wird.

8. Verfahren zur Datenkommunikation zwischen auf einem Gleisnetz befindlichen Schienenfahrzeugen und einer Zielsenke nach Anspruch 5 oder 6, **dadurch gekennzeichnet, dass** in einem Knoten eines jeden selbstkonfigurierenden Funknetzes aus den von den übrigen mobilen Knoten desselben Funknetzes empfangenen Datensätzen unter Auswertung jedes Datenelementes zur Feldstärke und / oder der aktuellen geographischen Position jedes Knotens die Belegung des Gleisnetzes mit Schienenfahrzeugen ermittelt wird.

9. Verfahren zur Datenkommunikation zwischen auf einem Gleisnetz befindlichen Schienenfahrzeugen und einer Zielsenke nach Anspruch 7 oder 8, **dadurch gekennzeichnet, dass** die Ermittlung der Reihungs-Folge und / oder der Belegung des Gleisnetzes in dem dem jeweils aktivierten Gateway des selbstkonfigurierenden Netzes zugeordneten Knoten erfolgt.

10. Verfahren zur Datenkommunikation zwischen auf einem Gleisnetz befindlichen Schienenfahrzeugen und einer Zielsenke nach Anspruch 7 oder 8, **dadurch gekennzeichnet, dass** die Ermittlung der Reihungs-Folge und / oder der Belegung des Gleisnetzes in einem ausschließlich für Auswertungszwecke vorgehaltenen Knoten des selbstkonfigurierenden Netzes erfolgt.

## Claims

1. Method for data communication between rail vehicles located on a rail network and a target sink, wherein each rail vehicle forms a mobile node of a self-configuring radio network known per se for data communication, the nodes of which communicate with one another using topology-based routing methods, and each rail vehicle has a mobile, (de)activatable gateway at the network gateway to a further telecommunication network, wherein
• the data communication from mobile nodes (A, B, C in Fig. 1) of a self-configuring radio network, which comprises at least one node formed as a locally installed gateway (1) at the network gateway to a further telecommunication network, to the target sink takes place via this at least one locally installed gateway,
• and also the data communication from mobile nodes of a self-configuring radio network, which comprises no nodes formed as locally installed gateway at the network gateway to a further telecommunication network, to the target sink takes place via a mobile gateway,
wherein in the course of an initialisation a mobile node (B in Fig. 2) of this self-configuring radio network is determined, whose mobile gateway (4) is activated for the data communication,
**characterised in that**
from each node of a self-configuring radio network status information regarding its own operational status is determined and is integrated in each case into a data set cyclically transmitted by this node, in order to determine the mobile gateway to be activated.

2. Method for data communication between rail vehicles located on a rail network and a target sink according to claim 1, **characterised in that** in order to determine the mobile gateway to be activated of each node of a self-configuring radio network, the capacity of the power supply of the mobile gateway associated with it is determined, is compared with the status information received from other nodes of the same radio network regarding the capacity of the power supply of further mobile gateways, and the status information of the best recognised power supply is integrated in each case into a data set cyclically transmitted from this node.

3. Method for data communication between rail vehicles located on a rail network and a target sink according to one of claims 1 or 2, **characterised in that** the mobile gateway of each mobile node of a self-configuring radio network is activated in the event of failure of communication connection between this mobile node and a locally installed gateway.

4. Method for data communication between rail vehicles located on a rail network and a target sink according to one of claims 1 to 3, **characterised in that** the data communication operating via each gateway is amplified by identification data for the unambiguous identification of the self-configuring radio network belonging to the gateway.

5. Method for data communication between rail vehicles located on a rail network and a target sink according to one of claims 1 to 4, **characterised in that** output data from sensors of a rail vehicle-specific sensor network are received by each mobile node of the self-configuring radio network, are evaluated, and the evaluation results are in each case integrated into a data set cyclically transmitted by this node.

6. Method for data communication between rail vehicles located on a rail network and a target sink according to one of claims 1 to 5, **characterised in that** data regarding the field strength of each communication received from adjacent nodes and/or information regarding the current specific geographical position of the node are determined in a cyclical manner from each mobile node of the self-configuring radio network and in each case are integrated into a data set transmitted by this node.

7. Method for data communication between rail vehicles located on a rail network and a target sink according to claim 5 or 6, **characterised in that** in a node of each self-configuring radio network the sequence of the further mobile nodes and rail vehicles connected to this node in the form of a block train is determined from the data sets received from the other mobile nodes of the same radio network by evaluating each data element in terms of the field strength or by evaluating output date of the sensors of the respective rail vehicle-specific sensor networks.

8. Method for data communication between rail vehicles located on a rail network and a target sink according to claim 5 or 6, **characterised in that** in a node of each self-configuring radio network the occupancy of the rail network by rail vehicles is determined from the data sets received from the other mobile nodes of the same radio network by evaluating each data element in terms of the field strength and/or the current geographical position of each node.

9. Method for data communication between rail vehicles located on a rail network and a target sink according to claim 7 or 8, **characterised in that** the determination of the sequence and/or of the occupancy of the rail network is carried out in the node associated with the respectively activated gateway of the self-configuring network.

10. Method for data communication between rail vehicles located on a rail network and a target sink according to claim 7 or 8, **characterised in that** the determination of the sequence and/or the occupancy of the rail network is carried out in a node of the self-configuring network dedicated exclusively for evaluation purposes.

## Revendications

1. Procédé de communication de données entre des véhicules sur rails se trouvant sur un réseau ferré et une cible, dans lequel chaque véhicule sur rails forme un noeud mobile d'un réseau radio à configuration automatique connu en soi servant à la communication de données, dont les noeuds communiquent entre eux en utilisant des procédés de routage à base de topologie et chaque véhicule sur rails dispose d'une passerelle mobile (dés)activable servant à la transition de réseau vers un autre réseau de télécommunication, dans lequel
- la communication de données de noeuds (A, B, C sur la figure 1) mobiles d'un réseau radio à configuration automatique, qui comprend au moins un noeud réalisé en tant que passerelle (1) installée localement servant à la transition de réseau vers un autre réseau de télécommunication, est effectuée par l'intermédiaire de ladite au moins une passerelle installée localement vers la cible,
- et la communication de données de noeuds mobiles d'un réseau radio à configuration automatique, qui ne comprend aucun noeud réalisé en tant que passerelle installée localement servant à la transition de réseau vers un autre réseau de télécommunication, est effectuée par l'intermédiaire d'une passerelle mobile vers la cible,
dans lequel, au cours d'une initialisation, un noeud (B sur la figure 2) mobile dudit réseau radio à configuration automatique est déterminé, dont la passerelle (4) mobile est activée pour la communication de données,
**caractérisé en ce que**
par chaque noeud d'un réseau radio à configuration automatique, des informations d'état concernant le statut de fonctionnement à proprement parler sont déterminées et intégrées respectivement dans un jeu de données envoyé cycliquement par ledit noeud pour déterminer la passerelle mobile à activer.

2. Procédé de communication de données entre des véhicules sur rail se trouvant sur un réseau ferré et une cible selon la revendication 1, **caractérisé en ce que** pour déterminer la passerelle mobile à activer de chaque noeud d'un réseau radio à configuration automatique, la capacité de puissance de l'alimentation en courant de la passerelle mobile qui lui est associée est déterminée, comparée aux informations d'état, reçues par d'autres noeuds de ce même réseau radio, concernant la capacité de puissance de l'alimentation en courant d'autres passerelles mobiles et l'information d'état de la meilleure alimentation en courant identifiée est intégrée respectivement dans un jeu de données envoyé de manière cyclique par ledit noeud.

3. Procédé de communication de données entre des véhicules sur rails se trouvant sur un réseau ferré et une cible selon l'une quelconque des revendications 1 ou 2, **caractérisé en ce que** la passerelle mobile de chaque noeud mobile d'un réseau radio à configuration automatique est activée lors d'une liaison de communication absente entre ledit noeud mobile et une passerelle installée localement.

4. Procédé de communication de données entre des véhicules automobiles se trouvant sur un réseau ferré et une cible selon l'une quelconque des revendications 1 à 3, **caractérisé en ce que** la communication de données en cours sur chaque passerelle est complétée d'une donnée de code servant à identifier clairement le réseau radio à configuration automatique associé à la passerelle.

5. Procédé de communication de données entre des véhicules sur rails se trouvant sur un réseau ferré et une cible selon l'une quelconque des revendications 1 à 4, 1 **caractérisé en ce que**, par chaque noeud mobile du réseau radio à configuration automatique, des données de départ de capteurs d'un réseau de capteurs propre au véhicule sont reçues, analysées et les résultats d'analyse sont intégrés respectivement dans un jeu de données envoyé cycliquement par ledit noeud.

6. Procédé de communication de données entre des véhicules sur rails se trouvant sur un réseau ferré et une cible selon l'une quelconque des revendications 1 à 5, **caractérisé en ce que**, par chaque noeud mobile du réseau radio à configuration automatique, des indications concernant l'intensité de champ de chaque message reçu par des noeuds voisins et/ou des indications concernant la position géographique propre instantanée du noeud sont déterminées de manière cyclique et intégrées respectivement dans un jeu de données envoyé de manière cyclique par ledit noeud.

7. Procédé de communication de données entre des véhicules sur rails se trouvant sur un réseau ferré et une cible selon la revendication 5 ou 6, **caractérisé en ce que** l'ordre des autres noeuds mobiles ou véhicules sur rails reliés audit noeud sous la forme d'un convoi est déterminé dans un noeud de chaque réseau radio à configuration automatique à partir des jeux de données reçus par les autres noeuds mobiles du même réseau radio en analysant chaque élément de données concernant l'intensité de champ ou en analysant des données de départ des capteurs des réseaux de capteurs propres au véhicule respectifs.

8. Procédé de communication de données entre des véhicules sur rails se trouvant sur un réseau ferré et une cible selon la revendication 5 ou 6, **caractérisé en ce que** le taux d'occupation du réseau ferré avec des véhicules sur rails est déterminé dans un noeud de chaque réseau radio à configuration automatique à partir des jeux de données reçus par les autres noeuds mobiles dudit réseau radio en analysant chaque élément de données concernant l'intensité de champ et/ou la position géographique instantanée de chaque noeud.

9. Procédé de communication de données entre des véhicules sur rails se trouvant sur un réseau ferré et une cible selon la revendication 7 ou 8, **caractérisé en ce que** la détermination de l'ordre et/ou du taux d'occupation du réseau ferré est effectuée dans le noeud associé à la passerelle respectivement activée du réseau à configuration automatique.

10. Procédé de communication de données entre des véhicules sur rails se trouvant sur un réseau ferré et une cible selon la revendication 7 ou 8, **caractérisé en ce que** la détermination de l'ordre et/ou du taux d'occupation du réseau ferré est effectuée dans un noeud, proposé exclusivement à des fins d'analyse, du réseau à configuration automatique.
